# EUROPEAN PATENT SPECIFICATION

(11) **EP 3 611 369 B1**
(45) Date of publication and mention of the grant of the patent: **12.10.2022**
(21) Application number: 18189309.0
(22) Date of filing: 16.08.2018
(51) Int. Cl.: F02M 55/02, F02M 69/46, B29C 45/14

(54) **A FUEL RAIL ASSEMBLY FOR AN INTERNAL COMBUSTION ENGINE AND A METHOD FOR ITS MANUFACTURE**
KRAFTSTOFFVERTEILERANORDNUNG FÜR EINEN VERBRENNUNGSMOTOR UND VERFAHREN ZU DEREN HERSTELLUNG
ENSEMBLE RAIL DE CARBURANT POUR UN MOTEUR À COMBUSTION INTERNE ET SON PROCÉDÉ DE FABRICATION

(43) Date of publication of application: 19.02.2020
(73) Proprietor: Vitesco Technologies GmbH, 93055 Regensburg (DE)
(72) Inventor: Serra, Giandomenico, 56010 Ghezzano - S.Giuliano Terme (PI) (IT); Mechi, Marco, 57016 Vada (LI) (IT); Di Domizio, Gisella, 56017 San Giuliano Terme (IT)
(74) Representative: Vitesco Technologies

(56) References cited:
- WO-A1-2006/105388
- WO-A2-2005/070579
- DE-A1- 19 608 781
- DE-A1-102005 008 038
- DE-A1-102005 051 697
- JP-A- H09 112 385

## Description

The present disclosure relates to a fuel rail assembly for an internal combustion engine, particularly but not exclusively, to a fuel rail assembly for a multi-cylinder gasoline direct injection engine, and to a method of manufacture of the fuel rail assembly.

The fuel rail assembly comprises a fuel reservoir in the form of an elongated fuel rail of generally tubular configuration to which fuel is supplied at high pressure, for example at up to 250 bar or up to 500 bar, into an inlet port of the fuel rail by a fuel pump. Spaced along the fuel rail are a plurality of fuel delivery outlets for hydraulically coupling the fuel rail to individual fuel injectors which are operable to inject fuel into the engine.

US 7,810,471 A1 relates to a conventional metal injector cup having a peripheral flange at its open end to strengthen/provide notches for locating the injector. Mention is made that the fuel rail could be of a metal, a thermoplastic or a combination of the two. However, improvements to fuel rails including a plastic material would be desirable to increase reliability. Another example is shown in JPH09112385A, where a rail housing made of resin has a metallic insert and reinforced ribs.

Therefore, it is an object of the present disclosure to provide an improved fuel rail including a plastic material.

The present disclosure provides a fuel rail assembly formed of a plastic material that incorporates a discrete reinforcing element in a predetermined region or regions of the fuel rail to locally increase the strength of the fuel rail in and around the regions in which the reinforcing element or elements are located. The reinforcing element or elements may also be used to minimise flexing of the plastic material in said region or regions. According to the invention, the fuel rail of the fuel rail assembly is a moulded plastic part, the reinforcing element is a metal part, overmoulded by the moulded plastic part.

The use of a plastic material, in particular a mouldable plastic material for the body of the fuel rail has attractions in terms of lower weight, cost of material and manufacturing cost. The use of a plastic material also has the advantage that its shape can be more readily altered to accommodate the space available for the fuel rail when installed on the engine. For operational reasons when using a high-pressure fuel injection system, it is desirable for the fuel rail to be placed as close as possible to the fuel injectors and hence the main structure of the engine. However, difficulties can occur in securing components to a plastics fuel rail in view of the operating environment of a fuel rail of a vehicle engine which involves high temperatures, vibration and operational stresses in the vehicle, in addition to the stresses caused by the high pressure in the fuel rail.

In an embodiment, the present disclosure provides a fuel rail assembly for a fuel injection system for an internal combustion engine, the fuel rail being formed of a plastic material, which may be a one-piece moulding, that forms a reservoir for fuel. The fuel rail comprises an elongate fuel rail body, an inlet port to which fuel is supplied at pressure to the reservoir, and a plurality of outlet ports spaced along the fuel rail, the outlet ports each incorporating a recess forming an injector cup adapted to receive an associated fuel injector to form the hydraulic connection between the fuel rail and the fuel injector. A discrete reinforcing element is located integrally in the fuel rail body in a predetermined region to strengthen the fuel rail in the predetermined region.

The use of the reinforcing element located in the wall of the fuel rail body forming the fuel reservoir has the advantage that the more highly stressed parts of the fuel rail are strengthened enabling the main part of the fuel rail to be lighter and, further, to use less material thus saving cost. Additionally, the dimensions of the fuel rail can be maintained in the regions with the reinforcing elements so that tolerances can be maintained.

In a preferred embodiment, a plurality of said discrete reinforcing elements are disposed in the fuel rail body. According to the invention, a reinforcing element is located in the region of each of the injector cups. In this arrangement, the reinforcing element comprises a generally cylindrical sleeve located coaxially with the injector cup.

The use of the reinforcing element for each injector cup also assists in the dealing function since deformation of the plastic injector cup can be avoided and the required diameter of the injector cup is maintained.

The sleeve may also include radii between the vertical and horizontal part. These radii may be optimised according to the application requirements and shape of the plastic body.

The reinforcing element is integrated within the fuel rail body such that it does not form part of the inner surface forming the fuel reservoir and such that it does not come into contact with the fuel. Consequently, the material requirements for the reinforcing element are more flexible since corrosion resistance against fuel is no longer a requirement.

The reinforcing element is embedded entirely within and, therefore, integrated entirely within the plastic material. According to the invention, the reinforcing element has at least one location element passing through the moulded material of the fuel rail body, i.e. passes through a wall of the fuel rail body, to lie outside the moulding and, therefore, outside an exterior surface of the fuel rail body. The location element may be adapted to be located on the fuel rail mould prior to the moulding process and is used to secure the position of the reinforcing element within the mould during the moulding process and thus to determine the location of the reinforcing element in the fuel rail body.

According to the invention the reinforcing element comprises a generally cylindrical sleeve having at its outer end a radially outwardly extending peripheral rim, at least part of which extends outwardly beyond the exterior surface of the fuel rail body to form the location element. This ensures that the sleeve is located accurately in the desired position in the mould and in the fuel rail body.

The reinforcing element may be formed of a metal or a plastic material, for example a plastic material that is stronger than the plastic material used to form the fuel rail body. The reinforcing element may be made of a stainless steel or a carbon steel. For embodiments including two or more reinforcing elements, the two or more reinforcing elements may be made of the same or different materials. For example, different materials could be used depending on the strengthening required in the location of the fuel rail in which that reinforcing element is located.

The plastic material of the fuel rail may be a thermosetting rein and may be reinforced by a filler, such as fibres, for example glass fibres or carbon fibres. Examples of suitable plastic materials are a glass fibre reinforced polyphenylene sulphide, or a glass fibre reinforced phenolic novolac polymer, or a glass fibre reinforced polyphthalamide.

There is also disclosed a method of manufacturing a fuel rail assembly having a fuel rail formed of a plastic material. The method includes providing a mould for forming the fuel rail, positioning a discrete reinforcing element in the mould in a predetermined region to strengthen the fuel rail in the predetermined region and inserting a plastic material into the mould and embedding the discrete reinforcing element in the plastic material forming the fuel rail body such that the discrete reinforcing element integrally formed in the fuel rail, in particular in the wall of the fuel rail body.

The plastic material may be inserted into the mould by injection moulding, for example.

According to the invention, the method comprises forming a plurality of sockets spaced along the fuel rail, the mould forming recesses in each of the sockets, each recess defining an injector cup for receiving a fuel injector, a reinforcing element being located in the mould in the region of each of the injector cups to strengthen the fuel rail in the region of the injector cups.

According to the invention, a location element is provided on each reinforcing element. The method further comprises securing the location element in the mould to locate the reinforcing element in the mould in a desired position. The reinforcing element is located in the mould such that the reinforcing element is substantially entirely integrally enclosed within the moulded plastic material of the fuel rail body.

The location element has a part which extends outwardly beyond an inner surface of the mould determining the exterior surface of the moulded fuel rail body. The part is engaged by the mould thereby to locate the reinforcing element in the desired position in the interior of the mould.

According to the invention, in the method, the reinforcing element comprises a generally cylindrical sleeve having at its outer end a radially outwardly extending peripheral rim. The outwardly extending peripheral rim may form the location element. At least part of the peripheral rim may extend outwardly beyond the inner surface of the mould determining the exterior surface of the fuel rail body and is engaged by a part of the mould thereby to locate the sleeve in the correct position in the interior of the mould.

According to the invention, the sleeve is located in the mould so as to be coaxial with the associated injector cup.

An embodiment of the present disclosure will now be described by way of example with reference to the accompanying drawings, in which:
- Figure 1: shows a schematic perspective of a fuel rail,
- Figure 2: shows a sectional side view along the line A-A of a fuel outlet of the fuel rail with a fuel injector valve connected thereto, and
- Figure 3: shows an enlarged perspective view of a reinforcement element incorporated in the fuel rail as shown in Figure 2.

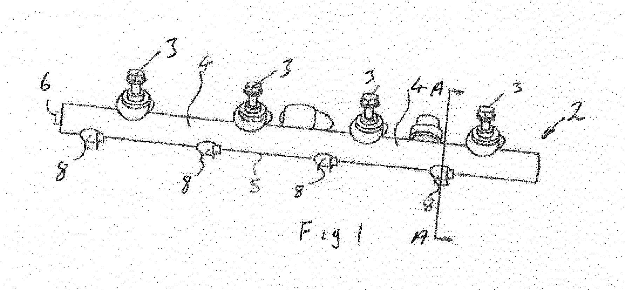

Referring now to Figure 1, there is shown part of a fuel rail assembly 2 for a gasoline direct injection internal combustion engine (not shown), which comprises an elongate fuel rail 4 forming a fuel reservoir. In this embodiment, the fuel rail is formed of a mouldable material such as a thermo-setting plastic material which is moulded into the desired form by injection moulding. In use, fuel at a high-pressure, for example at 200 bar, is supplied to an inlet port 6 of the fuel rail 4 by a pressure pump (not shown).

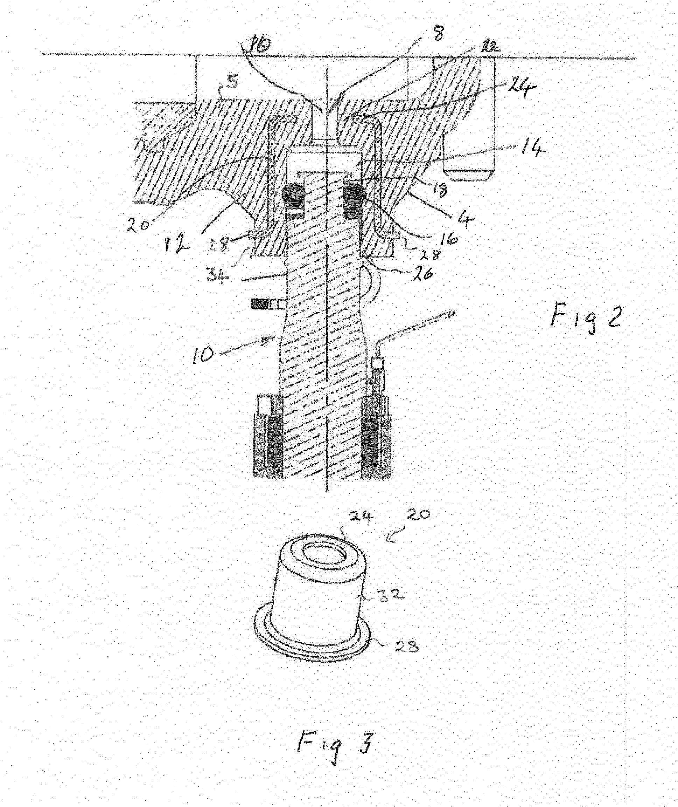

Spaced along its length, the fuel rail 4 has a plurality of fuel outlets 8, each of which forms a fuel delivery passage by which fuel is supplied to an associated fuel injector 10, seen in Figure 2. In this installation, the fuel rail assembly 2 is intended for a direct injection gasoline engine in which the fuel injectors are operable to inject fuel directly into a respective combustion chamber of the engine. As shown in Figure 1, the fuel rail assembly 2 is secured to the engine by one or more fixing bolts 3.

Figure 2 shows a sectional side view along the line A-A of a fuel outlet of the fuel rail with a fuel injector valve connected thereto. As shown in Figure 2 only one fuel injector 10 is shown but it will be understood that there will be one such arrangement for each cylinder of the engine. In other embodiments, the fuel injector or injectors will inject fuel into the engine manifold.

Each fuel outlet 8 has a socket 12 extending from the body 5 of the fuel rail 4, the socket 12 containing a recess forming an injector cup 14 adapted to receive an inlet part of the fuel injector 10. The injector cup 14 is cylindrical and is open at its outward end 22 to receive the fuel injector 10 and at its innermost end is in hydraulic communication with a fuel delivery inlet passage 30 which is in hydraulic communication with the interior of the fuel rail 4. A fluid tight connection between the fuel injector 10 and the injector cup 14 is achieved by a resilient O-ring 16 which is held in a peripheral groove 18 on the fuel injector 10.

The material of the rail 4 surrounding the injector cup 14 is reinforced by a reinforcing element 20 moulded integrally within the body 5 of the fuel rail 4. In this embodiment, the reinforcing element 20 is embedded within the wall and is does not form any part of the inner surface of the fuel rail 4 and, consequently, does not come into contact with the fuel within the fuel rail 4.

The reinforcing element 20 comprises a substantially cylindrical body or sleeve 32 concentrically disposed coaxially with the injector cup 14 and extending in the axial direction substantially over the length of the injector cup 14. At its inward end, the reinforcing element 20 has a radially inwardly extending web 24 defining an opening 22 to enable the hydraulic communication between the rail 4 and the injector cup 14. At its end adjacent the injector cup opening 26 in the injector cup 14 has a radially outwardly extending peripheral rim or flange 28 which, in this embodiment, projects through the wall of the extension socket 12 to lie outside the external surface 34 of the fuel rail 4. This extending flange 28 provides a location element which is used to facilitate the mounting of the reinforcing element 20 in the mould prior to the moulding of the fuel rail 4.

In this embodiment the reinforcing element 20 is formed of a metal such as stainless steel but may equally be formed of carbon steel or an alloy. It may also have corrugations to increase the bending strength. It is also envisaged that it may be formed of a plastics material having a greater strength and rigidity than the material of the rail 4. The moulding material of the fuel rail for this embodiment may be a glass fibre reinforced polyphenylene sulphide, such as Ryton XK2340, with 40% glass fibre content. Other materials which may be used are VYNCOLIT X6952, a short glass fibre moulding compound based on phenolic novolac polymer, or a heat stabilised 45% glass fibre reinforced polyphthalamide. Carbon fibres may also be used.

In another embodiment, the reinforcing element 20 may be formed of a mesh which may be formed as a complex non-uniform shape to provide the particular strength characteristics required of the reinforcing element for the particular installation.

Although described as coaxial with the injector cup it is possible for the reinforcing element 20 to be non-uniform and/or to be offset from the axis of the injector cup depending on the applied loads of a particular installation. In another embodiment, a reinforcing element 20 may be included to strengthen other parts of the fuel rail 4 such as the region around the inlet port 6 or regions of the fuel rail having a change in contour which may be locally subjected to increased stress, for example a curved portion of the fuel rail 4.

The fuel rail 4 may be manufactured by positioning the discrete reinforcing element 20 in a mould in a predetermined region in which it is desired to strengthen the fuel rail 4, inserting a plastic material into the mould, for example by injection moulding, and embedding the discrete reinforcing element 20 in the plastic material forming the fuel rail body 4. The position of the reinforcing element 20 within the mould may be fixed by use of the location element 28, for example by securing the periphery of the flange 28 in a corresponding cutout in the mould during the moulding process.

The discrete reinforcing element 20 comprises a material that is different from the plastic material forming the fuel rail. The reinforcing element 20 has materials properties to provide an increased strength compared to the material of the fuel rail. For example, the reinforcing element may comprise a stainless steel and the fuel rail 4 may comprise a reinforced thermosetting resin. The reinforcing element 20 is integrally formed and embedded within the wall of the fuel rail 4 such that it does not form a part of the interior surface of the fuel rail 4 and such that is does not come into contact with fuel within the fuel rail 4.

The reinforcing element 20 provides a localised increase in strength of the fuel rail around its position within the fuel rail wall. The advantages of the use of plastic for the fuel rail 4, such as a reduced weight are maintained, whilst at the same time increasing the strength of the fuel rail 4 at predetermined locations and increasing the reliability of the fuel rail assembly 2.

## Claims

1. A fuel rail assembly (2) for a fuel injection system for an internal combustion engine, the fuel rail assembly comprising a fuel rail (4) formed of a plastic material and forming a reservoir for fuel, the fuel rail (4) comprising an elongate fuel rail body (5) having an inlet port (6) to which fuel is supplied at pressure to the reservoir, and a plurality of outlet ports (8) spaced along the fuel rail (4), the outlet ports (8) each incorporating a recess forming an injector cup (14) adapted to receive an associated fuel injector (10) to form the hydraulic connection between the fuel rail (4) and the fuel injector (10), wherein a discrete reinforcing element (20) is located integrally in the fuel rail body (5) in a predetermined region to strengthen the fuel rail (4) in the predetermined region , wherein a reinforcing element (20) is located in the region of each of the injector cups (14), wherein the reinforcing element (20) comprises a generally cylindrical sleeve (32) located coaxially with an associated injector cup (14, wherein the reinforcing element (20) has at least one location element (28) passing through a wall of the fuel rail body to lie outside the exterior surface of the fuel rail body , the fuel rail assembly being **characterised in that** the generally cylindrical sleeve (32) has at its outer end a radially outwardly extending peripheral rim (28), at least part of which extends outwardly beyond the exterior surface of the fuel rail body to form the location element (28).

2. A fuel rail assembly (2) according to claim 1, wherein a plurality of said discrete reinforcing elements (20) are disposed in the fuel rail body.

3. A fuel rail assembly according to any one of claims 1 or 2, wherein the reinforcing element (20) is formed of metal, or a plastics material.

4. A fuel rail assembly according to claim 3, wherein the reinforcing element (20) comprises stainless steel or a carbon steel.

5. A method of manufacturing a fuel rail assembly having a fuel rail (4) formed of a plastic material, the method comprising:
providing a mould for forming the fuel rail (4);
positioning a discrete reinforcing element (20) in the mould in a predetermined region to strengthen the fuel rail (4) in the predetermined region;
inserting a plastic material into the mould and embedding the discrete reinforcing element (20) in the plastic material forming the fuel rail body (5) such that the discrete reinforcing element (20) is located integrally in the fuel rail body (5), including forming a plurality of sockets (12) spaced along the fuel rail (4), the mould forming recesses in each of the sockets, each recess defining an injector cup (14) for receiving a fuel injector, a reinforcing element (20) being located in the mould in the region of each of the injector cups (14) to strengthen the fuel rail (4) in the region of the injector cups (14), wherein a location element (28) is provided on each reinforcing element (20), the method further comprising securing the location element (28) in the mould to locate the reinforcing element (20) in the mould in a desired position, so the reinforcing element (20) is substantially entirely integrally enclosed within the plastic material of the fuel rail body (5), wherein the or each reinforcing element (20) comprises a generally cylindrical sleeve (32), wherein the sleeve (32) is located in the mould so as to be coaxial with the associated injector cup (14),
the method of manufacturing a fuel rail assembly being **characterised in that** the cylindrical sleeve (32) has at its outer end a radially outwardly extending peripheral rim forming the location element (28).

6. A method of manufacturing a fuel rail assembly according to claim 5, wherein the location element (28) has a part which extends outwardly beyond an inner surface of the mould determining an exterior surface (34) of the moulded fuel rail body (5), the part engaged by the mould thereby to locate the reinforcing element (20) element in the desired position in the interior of the mould.

7. A method of manufacturing a fuel rail assembly (2) according to claim 5 or 6, wherein at least part of the peripheral rim extends outwardly beyond the inner surface of the mould determining the exterior surface (34) of the fuel rail body (5) .

## Patentansprüche

1. Kraftstoffverteileranordnung (2) für ein Kraftstoffeinspritzsystem für eine Brennkraftmaschine, wobei die Kraftstoffverteileranordnung einen Kraftstoffverteiler (4) umfasst, der aus einem Kunststoffmaterial gebildet ist und einen Behälter für Kraftstoff bildet, wobei der Kraftstoffverteiler (4) einen länglichen Kraftstoffverteilerkörper (5) umfasst, der eine Einlassöffnung (6), zu der Kraftstoff mit Druck auf den Behälter zugeführt wird, und eine Mehrzahl von Auslassöffnungen (8), die entlang des Kraftstoffverteilers (4) beabstandet sind, aufweist, wobei die Auslassöffnungen (8) jeweils eine Aussparung enthalten, die eine Einspritzventiltasse (14) bildet, die dazu ausgelegt ist, ein zugehöriges Kraftstoffeinspritzventil (10) aufzunehmen, um die hydraulische Verbindung zwischen dem Kraftstoffverteiler (4) und dem Kraftstoffeinspritzventil (10) zu bilden, wobei ein diskretes Verstärkungselement (20) integral in dem Kraftstoffverteilerkörper (5) in einem vorbestimmten Bereich positioniert ist, um den Kraftstoffverteiler (4) in dem vorbestimmten Bereich zu festigen, wobei ein Verstärkungselement (20) in dem Bereich jeder der Einspritzventiltassen (14) positioniert ist, wobei das Verstärkungselement (20) eine im Allgemeinen zylindrische Hülse (32) umfasst, die koaxial mit einer zugehörigen Einspritzventiltasse (14) positioniert ist, wobei das Verstärkungselement (20) mindestens ein Positionierungselement (28) aufweist, das durch eine Wand des Kraftstoffverteilerkörpers so verläuft, dass es außerhalb der Außenfläche des Kraftstoffverteilerkörpers liegt, wobei die Kraftstoffverteileranordnung **dadurch gekennzeichnet ist, dass** die im Allgemeinen zylindrische Hülse (32) an ihrem äußeren Ende einen sich radial nach außen erstreckenden umlaufenden Rand (28) aufweist, von dem sich zumindest ein Teil über die Außenfläche des Kraftstoffverteilerkörpers hinaus nach außen erstreckt, um das Positionierungselement (28) zu bilden.

2. Kraftstoffverteileranordnung (2) nach Anspruch 1, wobei eine Mehrzahl der diskreten Verstärkungselemente (20) in dem Kraftstoffverteilerkörper angeordnet sind.

3. Kraftstoffverteileranordnung nach einem der Ansprüche 1 oder 2, wobei das Verstärkungselement (20) aus Metall oder einem Kunststoffmaterial gebildet ist.

4. Kraftstoffverteileranordnung nach Anspruch 3, wobei das Verstärkungselement (20) Edelstahl oder einen Kohlenstoffstahl umfasst.

5. Verfahren zum Herstellen einer Kraftstoffverteileranordnung, die einen Kraftstoffverteiler (4) aufweist, der aus einem Kunststoffmaterial gebildet ist, wobei das Verfahren Folgendes umfasst:
Bereitstellen einer Form zum Ausbilden des Kraftstoffverteilers (4);
Positionieren eines diskreten Verstärkungselements (20) in der Form in einem vorbestimmten Bereich, um den Kraftstoffverteiler (4) in dem vorbestimmten Bereich zu festigen;
Einbringen eines Kunststoffmaterials in die Form und Einbetten des diskreten Verstärkungselements (20) in das Kunststoffmaterial, das den Kraftstoffverteilerkörper (5) bildet, derart, dass das diskrete Verstärkungselement (20) integral in dem Kraftstoffverteilerkörper (5) positioniert ist, umfassend Ausbilden einer Mehrzahl von entlang des Kraftstoffverteilers (4) beabstandeten Aufnahmen (12), wobei die Form Aussparungen in jeder der Aufnahmen ausbildet, wobei jede Aussparung eine Einspritzventiltasse (14) zum Aufnehmen eines Kraftstoffeinspritzventils definiert, wobei ein Verstärkungselement (20) in der Form in dem Bereich jeder der Einspritzventiltassen (14) positioniert ist, um den Kraftstoffverteiler (4) in dem Bereich der Einspritzventiltassen (14) zu festigen, wobei ein Positionierungselement (28) an jedem Verstärkungselement (20) bereitgestellt ist, wobei das Verfahren ferner Sichern des Positionierungselements (28) in der Form, um das Verstärkungselement (20) in der Form in einer gewünschten Position zu positionieren, so dass das Verstärkungselement (20) im Wesentlichen vollständig integral in dem Kunststoffmaterial des Kraftstoffverteilerkörpers (5) eingeschlossen wird, umfasst, wobei das oder jedes Verstärkungselement (20) eine im Allgemeinen zylindrische Hülse (32) umfasst, wobei die Hülse (32) in der Form so positioniert wird, dass sie koaxial mit der zugehörigen Einspritzventiltasse (14) ist,
wobei das Verfahren zum Herstellen einer Kraftstoffverteileranordnung **dadurch gekennzeichnet ist, dass** die zylindrische Hülse (32) an ihrem äußeren Ende einen sich radial nach außen erstreckenden umlaufenden Rand aufweist, der das Positionierungselement (28) bildet.

6. Verfahren zum Herstellen einer Kraftstoffverteileranordnung nach Anspruch 5, wobei das Positionierungselement (28) einen Teil aufweist, der sich über eine Innenfläche der Form hinaus nach außen erstreckt, wobei eine Außenfläche (34) des geformten Kraftstoffverteilerkörpers (5) bestimmt wird, wobei der Teil durch die Form in Eingriff genommen wird, um dadurch das Element des Verstärkungselements (20) in der gewünschten Position im Inneren der Form zu positionieren.

7. Verfahren zum Herstellen einer Kraftstoffverteileranordnung (2) nach Anspruch 5 oder 6, wobei sich zumindest ein Teil des umlaufenden Rands über die Innenfläche der Form hinaus nach außen erstreckt, wobei die Außenfläche (34) des Kraftstoffverteilerkörpers (5) bestimmt wird.

## Revendications

1. Ensemble rampe de distribution de carburant (2) pour un système d'injection de carburant pour un moteur à combustion interne, l'ensemble rampe de distribution de carburant comprenant une rampe de distribution de carburant (4) constituée d'une matière plastique et formant un réservoir pour du carburant, la rampe de distribution de carburant (4) comprenant un corps de rampe de distribution de carburant (5) allongé comportant un orifice d'entrée (6) par lequel du carburant est introduit sous pression dans le réservoir, et une pluralité d'orifices de sortie (8) espacés le long de la rampe de distribution de carburant (4), les orifices de sortie (8) comportant chacun un évidement formant un godet à injecteur (14) apte à recevoir un injecteur de carburant (10) associé afin de former une liaison hydraulique entre la rampe de distribution de carburant (4) et l'injecteur de carburant (10), un élément de renforcement (20) distinct étant intégré au corps de rampe de distribution de carburant (5) dans une région prédéterminée afin de renforcer la rampe de distribution de carburant (4) dans la région prédéterminée, un élément de renforcement (20) étant placé dans la région de chacun des godets à injecteur (14), l'élément de renforcement (20) comprenant un manchon (32) globalement cylindrique placé coaxialement par rapport à un godet à injecteur (14) associé, l'élément de renforcement (20) comportant au moins un élément de positionnement (28) traversant une paroi du corps de rampe de distribution de carburant de sorte qu'il se situe à l'extérieur de la surface extérieure du corps de rampe de distribution de carburant, l'ensemble rampe de distribution de carburant étant **caractérisé en ce que** le manchon (32) globalement cylindrique comporte, au niveau de son extrémité extérieure, un rebord périphérique (28) s'étendant radialement vers l'extérieur, dont au moins une partie s'étend vers l'extérieur au-delà de la surface extérieure du corps de rampe de distribution de carburant pour former l'élément de positionnement (28).

2. Ensemble rampe de distribution de carburant (2) selon la revendication 1, dans lequel une pluralité desdits éléments de renforcement (20) distincts sont disposés dans le corps de rampe de distribution de carburant.

3. Ensemble rampe de distribution de carburant selon l'une quelconque des revendications 1 et 2, dans lequel l'élément de renforcement (20) est constitué de métal ou d'une matière plastique.

4. Ensemble rampe de distribution de carburant selon la revendication 3, dans lequel l'élément de renforcement (20) comprend de l'acier inoxydable ou un acier au carbone.

5. Procédé de fabrication d'un ensemble rampe de distribution de carburant comportant une rampe de distribution de carburant (4) constituée d'une matière plastique, le procédé comprenant :
la préparation d'un moule pour former la rampe de distribution de carburant (4) ;
la disposition d'un élément de renforcement (20) distinct dans le moule dans une région prédéterminée afin de renforcer la rampe de distribution de carburant (4) dans la région prédéterminée ;
l'insertion d'une matière plastique dans le moule et l'incorporation de l'élément de renforcement (20) distinct dans la matière plastique formant le corps de rampe de distribution de carburant (5) de telle sorte que l'élément de renforcement (20) distinct soit intégré dans le corps de rampe de distribution de carburant (5), ceci incluant la formation d'une pluralité de cavités (12) espacées le long de la rampe de distribution de carburant (4), le moule formant des évidements dans chacune des cavités, chaque évidement définissant un godet à injecteur (14) destiné à recevoir un injecteur de carburant, un élément de renforcement (20) étant placé dans le moule dans la région de chacun des godets à injecteur (14) afin de renforcer la rampe de distribution de carburant (4) dans la région des godets à injecteur (14), un élément de positionnement (28) étant formé sur chaque élément de renforcement (20), le procédé comprenant en outre l'assujettissement de l'élément de positionnement (28) dans le moule afin de placer l'élément de renforcement (20) dans le moule dans une position souhaitée, de telle sorte que l'élément de renforcement (20) soit presque entièrement incorporé dans la matière plastique du corps de rampe de distribution de carburant (5), l'élément ou chaque élément de renforcement (20) comprenant un manchon (32) globalement cylindrique, le manchon (32) étant placé dans le moule de façon à être coaxial par rapport au godet à injecteur (14) associé,
le procédé de fabrication d'un ensemble rampe de distribution de carburant étant **caractérisé en ce que** le manchon (32) cylindrique comporte, au niveau de son extrémité extérieure, un rebord périphérique s'étendant radialement vers l'extérieur formant l'élément de positionnement (28).

6. Procédé de fabrication d'un ensemble rampe de distribution de carburant selon la revendication 5, dans lequel l'élément de positionnement (28) comporte une partie qui s'étend vers l'extérieur au-delà d'une surface intérieure du moule déterminant une surface extérieure (34) du corps de rampe de distribution de carburant (5) moulé, le moule entrant en prise avec la partie pour placer ainsi l'élément de renforcement (20) dans la position souhaitée à l'intérieur du moule.

7. Procédé de fabrication d'un ensemble rampe de distribution de carburant (2) selon la revendication 5 ou 6, dans lequel au moins une partie du rebord périphérique s'étend vers l'extérieur au-delà de la surface intérieure du moule déterminant la surface extérieure (34) du corps de rampe de distribution de carburant (5).
